# EUROPEAN PATENT APPLICATION

(11) **EP 2 827 560 A1**
(43) Date of publication of application: **21.01.2015**
(21) Application number: 14176774.9
(22) Date of filing: 11.07.2014
(51) Int. Cl.: H04L 29/08, G06Q 10/06

(54) **Data communication apparatus and method, and product producing system**

(30) Priority: 16.07.2013 JP 2013147361; 20.05.2014 JP 2014104169
(71) Applicant: Fujifilm Corporation, Minato-ku Tokyo 106-8620 (JP)
(72) Inventor: Seto, Satoshi, Tokyo, 107-0052 (JP)
(74) Representative: Klunker . Schmitt-Nilson . Hirsch

(57) **Abstract**

Provided are a data communication apparatus and method and a product producing system which can prevent each user, which is a person in charge of a work item, from forgetting the content and existence of a notice. It is determined whether the re-notification of data for urging the execution of a work item corresponding to an execution phase (hereinafter, referred to as an execution target item) is required on the basis of progress information of each work item Then, the content of notices related to two or more execution target items which are determined to be required for the re-notification is integrated for each user who is given an execution right over a plurality of production jobs and the integrated content is transmitted as notification data corresponding to one operation.

## Description

### BACKGROUND OF THE INVENTION

### 1. Field of the Invention

The present invention relates to a data communication apparatus and method and a product producing system which can transmit notification data to at least one terminal apparatus which participates in a production job for producing a product.

### 2. Description of the Related Art

In recent years, in the printing field, an electronic proofreading system has been spreading which transmits and receives proofreading data that is created by a manufacturer, such as a printing company, or correction instruction information from a publishing company, such as an ordering company, to and from each person in charge who is geographically distant through a communication line, thereby achieving remote proof which omits the exchange of a proof sheet.

JP2011-242948A discloses a system in which, during a printing workflow, after a specific work item is completed, mail for requesting the execution of the work item is transmitted to the person in charge of the next work item.

JP2005-103808A discloses a technique which acquires the delivery date of a work item and the time before the work item is executed and notifies the result of the determination whether the work item is delayed. The notification destination may be, for example, the person in charge of each work item, as well as an ordering party and an administrator.

### SUMMARY OF THE INVENTION

However, when there are a plurality of interested parties which participate in the production of a product, a process from the submission of a manuscript to the production of the product tends to be complicated. In particular, when a large number of production jobs are executed in parallel, the progress management of each person in charge is complicated. As a result, there is a concern that a working process will be delayed.

However, when the technique disclosed in JP2005-103808A is applied to the system disclosed in JP2011-242948A, a large number of notices are transmitted for each production job and each work item. Therefore, each person in charge who is in charge of a notification destination is likely to forget the content and existence of the notice.

The invention has been made in view of the above-mentioned problems and an object of the invention is to provide a data communication apparatus and method and a product producing system which can prevent each user, who is a person in charge of a work item, from forgetting the content and existence of a notice when a large number of production jobs having a complicated process are executed in parallel.

According to an aspect of the invention, there is provided a data communication apparatus that can transmit notification data to at least one terminal apparatus which participates in a production job for producing a product. The data communication apparatus includes: a job definition unit that defines a series of work items forming the production job, a right to execute each of the work items, and an execution order of the work items; an item extraction unit that extracts the work item corresponding to an execution phase as an execution target item for each production job, on the basis of progress information of each of the work items which are sequentially executed; a re-notification determination unit that, when the notification data for requesting the execution of each execution target item extracted by the item extraction unit has been transmitted, determines whether re-notification for urging the execution is required; and a transmission processing unit that integrates the content of notices related to two or more execution target items which are determined to require the re-notification by the re-notification determination unit for each user who is given the execution right over a plurality of the production jobs defined by the job definition unit and transmits the integrated content as the notification data corresponding to one operation.

As such, the re-notification determination unit that determines whether re-notification for urging the execution of the work item (hereinafter, referred to as an execution target item) corresponding to the execution phase is required on the basis of the progress information of each of the work items which are sequentially executed and the transmission processing unit that integrates the content of the notices related to two or more execution target items which are determined to require the re-notification for each user who is given the execution right over a plurality of production jobs and transmits the integrated content as the notification data corresponding to one operation are provided. Therefore, each user, who is a person in charge of the work item, can access the notification data through one operation and collectively check the content of each execution target item. As a result, when a large number of production jobs having a complicated process are executed in parallel, it is possible to prevent each user from forgetting the content and existence of a notice.

The data communication apparatus according to the above-mentioned aspect may further include a history data creation unit that accumulates at least a portion of the transmitted notification data to create history data. The re-notification determination unit may determine whether the re-notification is required, on the basis of the analysis result of the history data created by the history data creation unit.

The re-notification determination unit may determine whether the re-notification is required, on the basis of individual information about at least one of a delivery date, a degree of progress, the number of processes, and the number of re-notifications for each work item.

The re-notification determination unit may determine whether the re-notification is required, on the basis of user information about at least one of an amount of work, a degree of proficiency, a business schedule, and the number of re-notifications for each user.

The re-notification determination unit may determine whether the re-notification is required, on the basis of all information about at least one of the latest delivery date, a degree of overall progress, the total number of processes, and a customer for each production job.

The transmission processing unit may transmit the notification data including electronic data related to the production job or an URL indicating the location of a web page. The URL may be an individual URL associated with one production job and/or a composite URL associated with a plurality of the production jobs.

According to another aspect of the invention, a product producing system includes the data communication apparatus according to the above-mentioned aspect and at least one terminal apparatus that can receive the notification data transmitted from the data communication apparatus and participates in the production job.

According to still another aspect of the invention, there is provided a method using a data communication apparatus that can transmit notification data to at least one terminal apparatus which participates in a production job for producing a product. The method includes: a definition step of defining a series of work items forming the production job, a right to execute each of the work items, and an execution order of the work items; an extraction step of extracting the work item corresponding to an execution phase as an execution target item for each production job, on the basis of progress information of each of the work items which are sequentially executed; a determination step of, when the notification data for requesting the execution of each of the extracted execution target items has been transmitted, determining whether re-notification for urging the execution is required; and a transmission step of integrating the content of notices related to two or more execution target items which are determined to require the re-notification for each user who is given the execution right over a plurality of the production jobs and transmitting the integrated content as the notification data corresponding to one operation.

According to the data communication apparatus and method and the product producing system of the above-mentioned aspects of the invention, it is determined whether re-notification for urging the execution of a work item (hereinafter, referred to as an execution target item) corresponding to the execution phase is required on the basis of the progress information of each of the work items which are sequentially executed, and the content of notices related to two or more execution target items which are determined to require the re-notification is integrated for each user who is given the execution right over a plurality of production jobs and is then transmitted as the notification data corresponding to one operation. Therefore, each user, who is a person in charge of the work item, can access the notification data through one operation and collectively check the content of each execution target item. As a result, when a large number of production jobs having a complicated process are executed in parallel, it is possible to prevent each user from forgetting the content and existence of a notice.

### BRIEF DESCRIPTION OF THE DRAWINGS

Fig. 1 is a diagram illustrating the overall structure of a product producing system according to an embodiment.
Fig. 2 is an electrical block diagram illustrating a remote server shown in Fig. 1.
Fig. 3 is an electrical block diagram illustrating an administrator terminal or an operator terminal shown in Fig. 1.
Fig. 4 is a first flowchart illustrating the operation of the product producing system shown in Fig. 1.
Fig. 5 is an image diagram illustrating an execution right setting screen.
Fig. 6 is an image diagram illustrating a mail setting screen.
Fig. 7 is an image diagram illustrating a screen for setting work items and the execution order of the work items.
Fig. 8 is a second flowchart illustrating the operation of the product producing system shown in Fig. 1.
Fig. 9 is a schematic diagram illustrating a list of history data shown in Fig. 2.
Fig. 10A is a schematic diagram illustrating a list of all information, and Fig. 10B is a schematic diagram illustrating a list of user information.
Fig. 11 is a first schematic diagram visibly illustrating the content of integrated notification data.
Fig. 12 is a second schematic diagram visibly illustrating the content of the integrated notification data.
Fig. 13 is a third schematic diagram visibly illustrating the content of the integrated notification data.

### DESCRIPTION OF THE PREFERRED EMBODIMENTS

Hereinafter, a preferred embodiment of the relationship between a data communication method according to the invention and a data communication apparatus and a product producing system which perform the data communication method will be described in detail with reference to the accompanying drawings.

### <Overall Structure of Product Producing System 10>

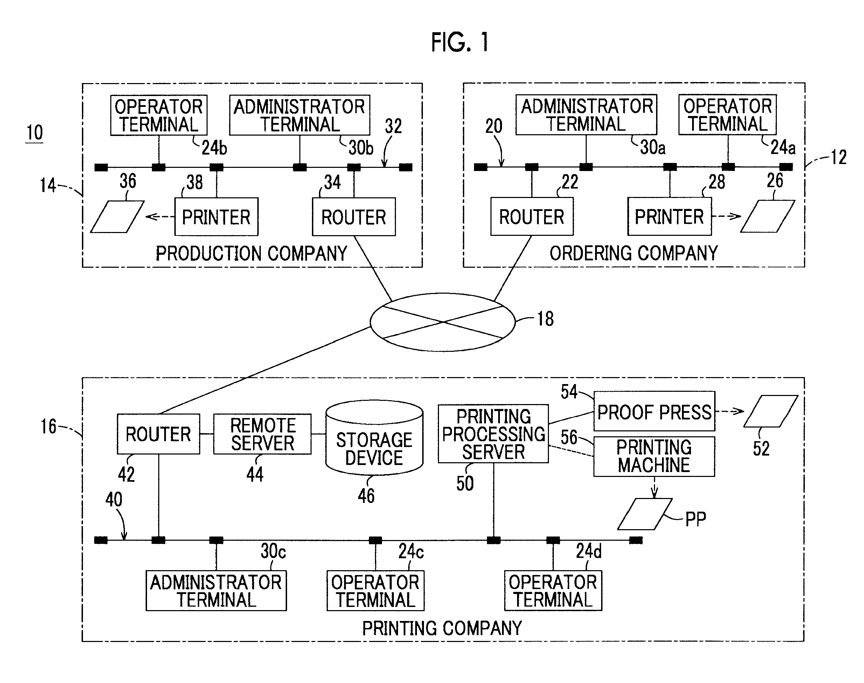

Fig. 1 is a diagram illustrating the overall structure of a product producing system 10 according to the embodiment.

The product producing system 10 is constructed among an ordering company 12, such as an advertising agency or a client, a production company 14 to which, for example, a designer belongs, and a printing company 16 to which, for example, an operator belongs through a network 18, such as a local area network (LAN) or a wide area network (WAN). The structure of each player is not limited to that shown in Fig. 1. For example, the production company 14 and the printing company 16 may be the same company.

The ordering company 12 includes a router 22 which relays connection between the network 18 and a LAN 20, an operator terminal 24a which performs a proofreading operation on the basis of proofreading data transmitted from the printing company 16, a printer 28 which prints a proof 26 on the basis of the proofreading data transmitted from the operator terminal 24a, and an administrator terminal 30a which approves the proofreading data. Here, printing data which is generated during a first proof, a second proof, a third proof, and a final proof is generically referred to as "proofreading data".

The production company 14 includes a router 34 which relays connection between the network 18 and a LAN 32, an operator terminal 24b which creates various kinds of content, a printer 38 which prints a proof 36 on the basis of proofreading data transmitted from the operator terminal 24b, and an administrator terminal 30b which approves the submission of content data.

The printing company 16 includes a router 42 which relays connection between the network 18 and a LAN 40, a remote server 44 (data communication apparatus) which can be accessed by each terminal that belongs to an external network including the LANs 20 and 32 through the network 18, a storage device 46 which can freely read and write various data files related to the production of a printed matter PP as a product, an administrator terminal 30c for performing various operations required for production, operator terminals 24c and 24d for performing a proofreading operation on the basis of the proofreading data acquired through the remote server 44, a printing processing server 50 which performs image processing, such as a rasterizing process or a color conversion process, on the basis of proofreading data (or plate making data) updated by, for example, the operator terminal 24c, a proof press 54 which can print a proof 52 on the basis of the processed proofreading data transmitted from the printing processing server 50, and a printing machine 56 which is provided with a press plate (not shown) and can produce the printed matter PP.

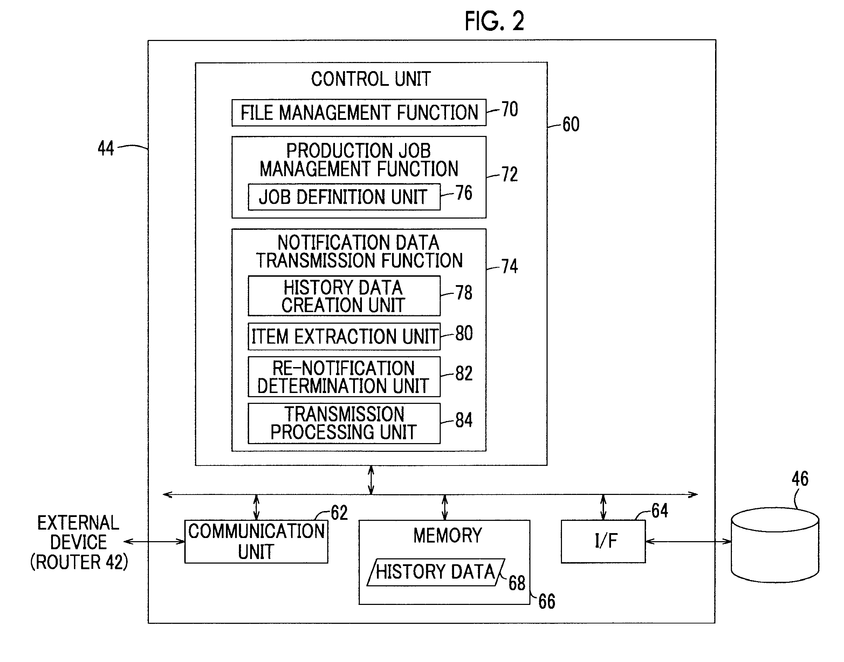

In this embodiment, the remote server 44 has a file management function 70, a production job management function 72, and a notification data transmission function 74 (see Fig. 2).

The printing processing server 50 converts proofreading data (or plate making data) which is described by a page description language into dot data corresponding to each output device and supplies the dot data to the proof press 54 (or the printing machine 56).

The proof press 54 prints the proof 52 on the basis of the dot data supplied from the printing processing server 50. For example, direct digital color proofing (DDCP), an ink-jet color proofer, a low-resolution color laser printer (electrophotographic type), or an ink-jet printer may be used as a proofer.

The printing machine 56 prints the printed matter PP on the basis of the dot data supplied from the printing processing server 50. In addition to an offset printing machine, a digital printing machine for direct printing may be used as the printing machine. For example, an ink-jet printing machine, a wide format printing machine, an ink-jet color proofer, or a color laser printer may be used as the digital printing machine.

### <Electrical Block Diagram of Remote Server 44>

Fig. 2 is an electrical block diagram illustrating the remote server 44 shown in Fig. 1. The remote server 44 is a computer including a control unit 60, a communication unit 62, an I/F 64, and a memory 66.

The communication unit 62 is an interface which transmits an electric signal to an external device and receives an electric signal from the external device. Therefore, the remote server 44 freely acquires content data which is supplied from, for example, the production company 14 through the communication unit 62.

The I/F 64 is an interface for data communication with the storage device 46. Therefore, the remote server 44 stores various kinds of data in the storage device 46 or freely reads data from the storage device 46.

The memory 66 stores, for example, a program and data required for the control unit 60 to control each unit. The memory 66 may be a recording medium such as a non-volatile memory or a hard disk. In the example shown in Fig. 2, the memory 66 stores history data 68 obtained by accumulating at least a portion of the transmitted notification data.

The control unit 60 is a processor such as a central processing unit (CPU). The control unit 60 reads the program stored in the memory 66 and executes the program to implement the file management function 70, the production job management function 72, and the notification data transmission function 74.

The file management function 70 stores and transmits various data files required to produce the printed matter PP. The various data files include content data, proofreading data, plate making data, a job ticket {for example, a job definition format (JDF) file}, an international color consortium (ICC) profile, and color chart data transmitted from, for example, the production company 14.

The production job management function 72 registers various settings related to a production job (workflow) and operates this system on the basis of the registration information. The production job management function 72 includes a job definition unit 76 which defines a series of work items forming the production job, a right to execute each work item, and the execution order of the work items.

The notification data transmission function 74 timely transmits notification data (including integrated notification data 150 which will be described below) to a predetermined terminal apparatus and user on the basis of the information registered by the production job management function 72. Specifically, the notification data transmission function 74 includes a history data creation unit 78, an item extraction unit 80, a re-notification determination unit 82, and a transmission processing unit 84.

However, the control unit 60 can execute application software which enables the transmission, reception, and browsing of web-based content data. For example, a hypertext transfer protocol (HTTP), a secure socket layer (SSL), transport layer security (TLS), or HTTP over SSL (HTTPS) may be used as a communication protocol between the client and the server.

### <Electrical Block Diagram of Administrator Terminal 30 or Operator Terminal 24>

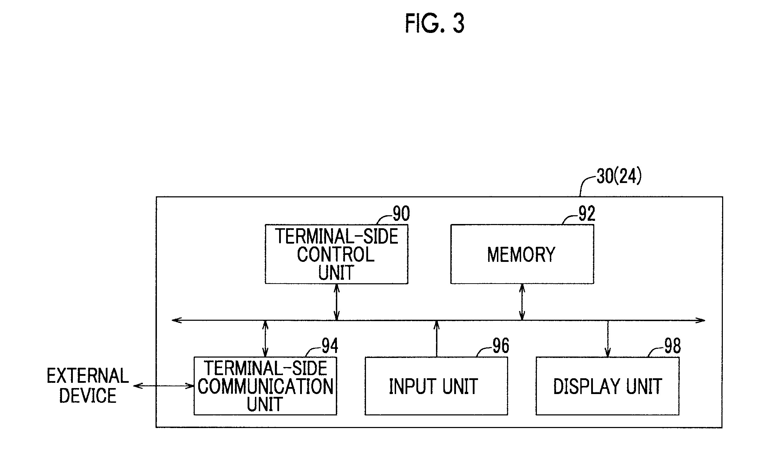

Fig. 3 is an electrical block diagram illustrating the administrator terminal 30 or the operator terminal 24 shown in Fig. 1. Hereinafter, in some cases, for convenience of explanation, the administrator terminals 30a to 30c shown in Fig. 1 are generically referred to as an "administrator terminal 30" and the operator terminals 24a to 24c shown in Fig. 1 are generically referred to as an "operator terminal 24".

The administrator terminal 30 is a computer including a terminal-side control unit 90, a memory 92, a terminal-side communication unit 94, an input unit 96, and a display unit 98. Here, the terminal-side control unit 90, the memory 92, and the terminal-side communication unit 94 can have the same structure as the control unit 60, the memory 66, and the communication unit 62, respectively (see Fig. 2).

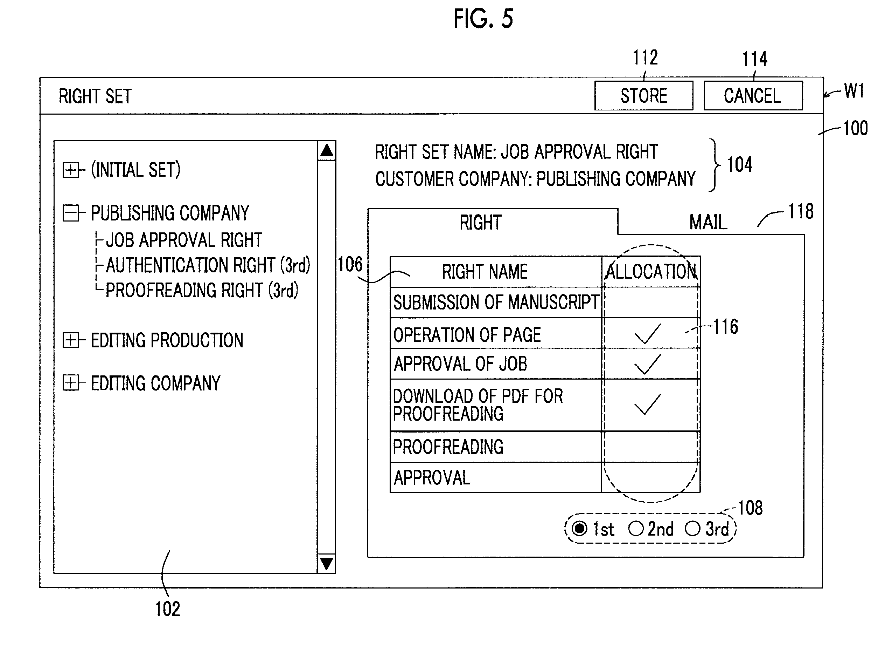

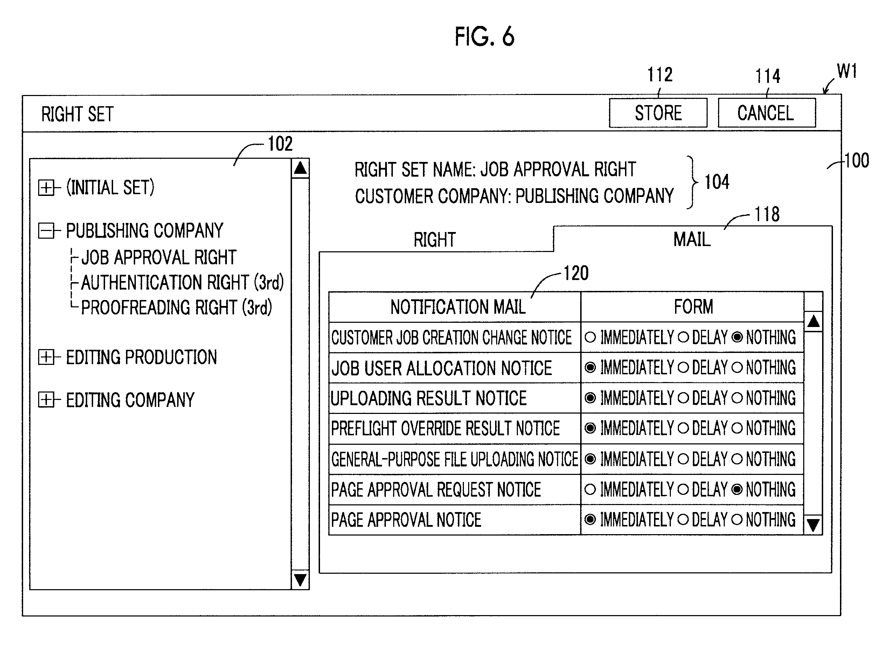

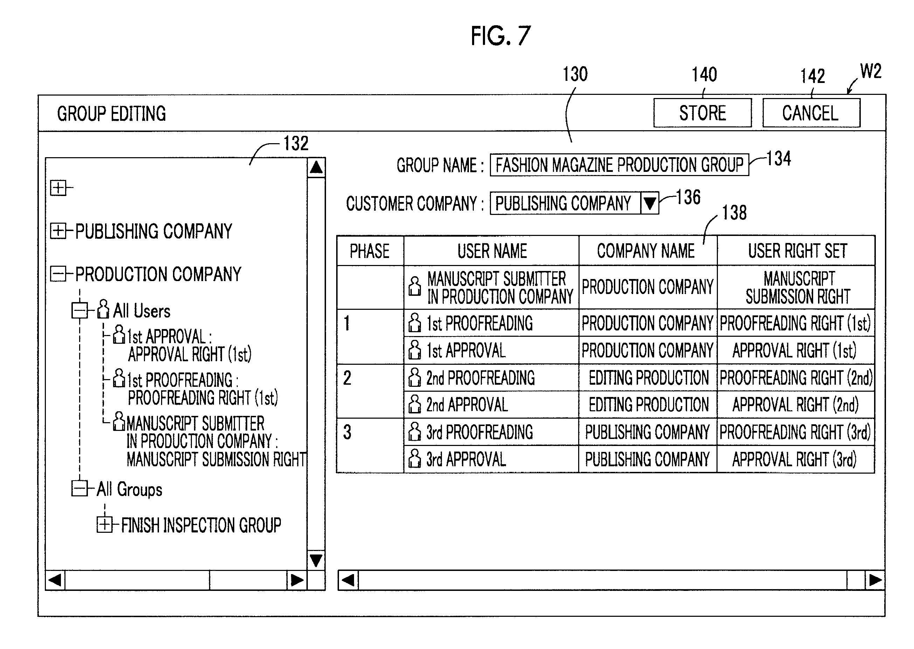

The input unit 96 includes various input devices, such as a mouse, a trackball, a keyboard, and a touch sensor. The display unit 98 can display various images including windows W1 (see Figs. 5 and 6) and W2 (see Fig. 7) through a control circuit (not shown). The input function of the input unit 96 and the display function of the display unit 98 are combined with each other to form a user interface.

In addition, the terminal-side control unit 90 of the administrator terminal 30 (or the operator terminal 24) can execute application software which enables the transmission, reception, and/or browsing of web-based content data, similarly to the remote server 44 (Fig. 2).

### <Operation (First Half) of Product Producing System 10>

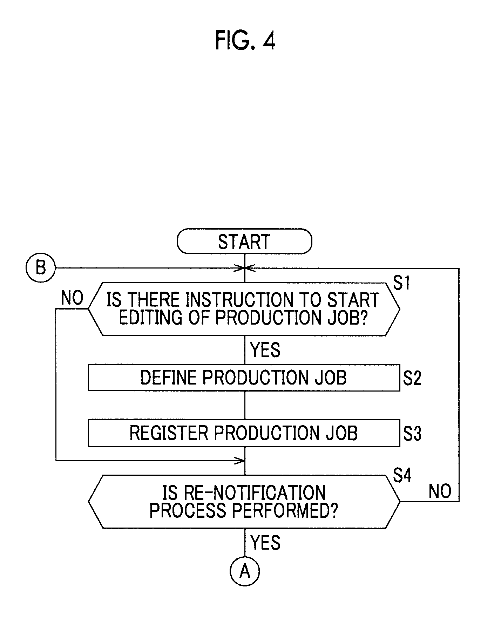

The product producing system 10 according to this embodiment has the above-mentioned structure. Next, the operation of the product producing system 10 related to the execution of a re-notification process will be described with reference to the flowchart shown in Fig. 4. It is noted that Steps S1 and S2 in Fig. 4 are mainly performed in the administrator terminal 30 and Steps S3 and S4 are mainly performed in the remote server 44.

Here, the term "re-notification process" means a process which re-transmits, to the user to which a request to execute the work item has been transmitted at a specific transmission time, a notice for urging the user to execute the work item (including notification after re-notification). Examples of the specific transmission time include the notification of the submission of a manuscript, the notification of the execution of a preflight process, the notification of the start and/or end of proofreading, the notification of approval, and the notification of the completion of proofreading (job approval).

In Step S1, the terminal-side control unit 90 (Fig. 3) of the administrator terminal 30 determines whether an instruction to start the editing of the production job (including the creation of a production job) is input through the input unit 96. When determining that the start instruction is not input, the terminal-side control unit 90 does not perform Steps S2 and S3 and proceeds to Step S4. On the other hand, when determining that the start instruction is input, the terminal-side control unit 90 proceeds to the next Step S2.

In Step S2, the terminal-side control unit 90 defines the production job to be executed. Prior to this operation, the terminal-side control unit 90 creates display data for displaying the window W1 (including a setting screen 100) and supplies the display data to the display unit 98.

First, the terminal-side control unit 90 gives a right to each user for each work item. Here, the right includes, for example, a manuscript submission right (right to upload files), a proofreading right (right to proofread each page), and an approval right (right to approve each page). In this embodiment, the concept of a "right set", which is a set of rights, is used in order to facilitate the management of the rights of each user.

As shown in Fig. 5, a right set display field 102, an attribute display field 104, a setting field 106, three radio buttons 108, a [store] button 112, and a [cancel] button 114 are sequentially arranged on the setting screen 100 from the left side.

The registered right set names are displayed in a tree structure in the right set display field 102. The name of the right set to be designated (for example, the job approval right) and the name of a group to which the user belongs (for example, a "publishing company" as the ordering company 12) are displayed in the attribute display field 104. The names of rights and information indicating whether the rights are allocated are displayed in a list format in the setting field 106.

A predetermined operation using the input unit 96, specifically, a click operation for the check field 116 is performed to freely change the allocation of each right to the right set. In the example shown in Fig. 5, three rights, that is, a page operation right, a job approval right, and a right to download a portable document format (PDF) file for proofreading are given to the "job approval right" in the printing company 16.

Second, the terminal-side control unit 90 designates the notification conditions of mail to each user. When a tap 118 (see Fig. 5) is clicked, the terminal-side control unit 90 displays the window W1 on the display unit 98 while changing the shape of a portion of the setting screen 100.

As shown in Fig. 6, a received event and a reception time are displayed in a list format in a new setting field 120. An "immediately" mode is a mode in which, when it is determined that the previous work item is completed, mail is immediately transmitted to a person who relates to the next work item. A "delay" mode is a mode in which, after a predetermined period of time has elapsed from the determination that the previous work item has been completed, one or a plurality of mail are transmitted to the person who relates to the next work item once. A "nothing" mode is a mode in which the transmission of mail is rejected.

Third, the terminal-side control unit 90 allocates the user who participates in each work item to the production job to be executed. Prior to this operation, the terminal-side control unit 90 creates display data for displaying the window W2 (including a setting screen 130) and supplies the displayed data to the display unit 98.

As shown in Fig. 7, a user display field 132, a text box 134, a pull-down menu 136, a setting field 138, a [store] button 140, and a [cancel] button 142 are sequentially arranged on the setting screen 130 from the left side.

The registered user names are displayed in a tree structure in the user display field 132. The text box 134 is a field to which a group name related to the printed matter PP is input. The pull-down menu 136 is a field to which the name of the ordering company 12 of the printed matter PP is input. The attribute of the work item, a user name, a company name, and a right set are displayed in a list format in the setting field 138.

A predetermined operation, specifically, a drag operation having a predetermined position in the user display field 132 as a starting point and a predetermined position in the setting field 138 as an end point is input through the input unit 96 to freely add or delete the user who participates in the job.

In Step S3, the remote server 44 newly registers the production job defined in Step S2 and stores the registration information of the production job in the storage device 46.

Returning to Fig. 6, when the [store] button 112 is clicked, the administrator terminal 30, for example, the administrator terminal 30c in the printing company 16 transmits new setting data which is input through the setting screen 100 to the remote server 44 through the LAN 40 and the router 42. Then, the control unit 60 (job definition unit 76) stores the received setting data in the storage device 46. When the [cancel] button 114 is clicked, the window W1 is closed and the setting operation is stopped.

Returning to Fig. 7, when the [store] button 140 is clicked, the administrator terminal 30, for example, the administrator terminal 30a in the ordering company 12 transmits the allocation information which is input through the setting screen 130 to the remote server 44 through the LAN 20, the router 22, the network 18, and the router 42. Then, the control unit 60 (job definition unit 76) stores the received right data in the storage device 46. When the [cancel] button 142 is clicked, the window W2 is closed and the setting operation is stopped.

In Step S4, the notification data transmission function 74 (Fig. 2) of the remote server 44 determines whether to perform the re-notification process. This determination is performed on the basis of, for example, whether a predetermined period of time has elapsed from the previous execution time or whether a request instruction is received from the administrator terminal 30.

When it is determined that the re-notification process is not performed (Step S4: NO), the process returns to Step S1 and Steps S1 to S3 are sequentially repeated. On the other hand, when it is determined that the re-notification process is performed (Step S4: YES), the process proceeds to Step (S5).

### <Operation (Second Half) of Product Producing System 10>

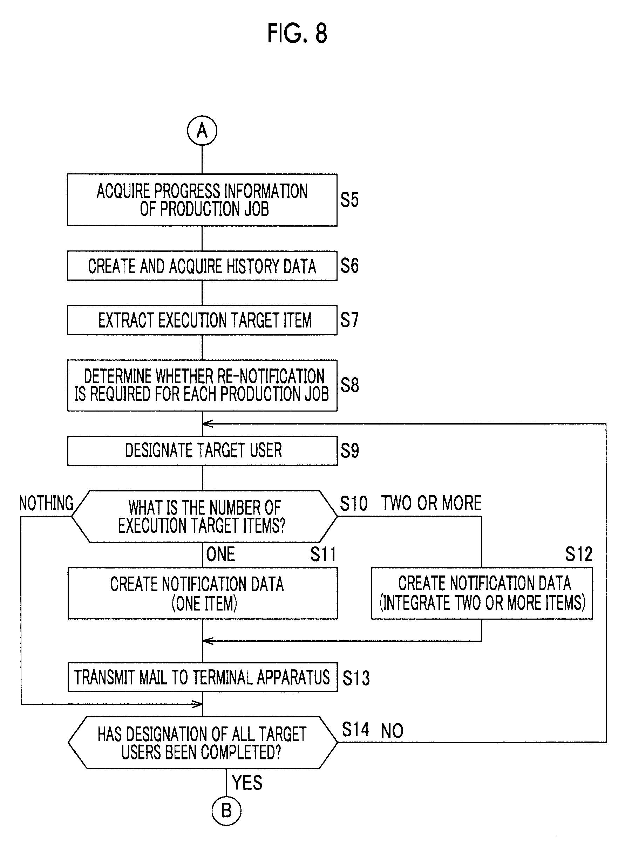

Then, the operation of the product producing system 10 related to the execution of the re-notification process will be described with reference to the flowchart shown in Fig. 8. It is noted that Steps S5 to S14 in Fig. 8 are mainly performed in the remote server 44.

In Step S5, the notification data transmission function 74 acquires the progress information of one or two or more production jobs which are currently registered from the production job management function 72 or the storage device 46. It is assumed that the present time is "January 25, 2013" (which may include hours, minutes, and seconds).

In Step S6, the history data creation unit 78 creates the latest history data 68 on the basis of the progress information acquired in Step S5 and acquires the latest history data 68. Specifically, the history data creation unit 78 sequentially accumulates the transmitted or re-transmitted notification data and appropriately processes the notification data in an arbitrary data format to create the history data 68.

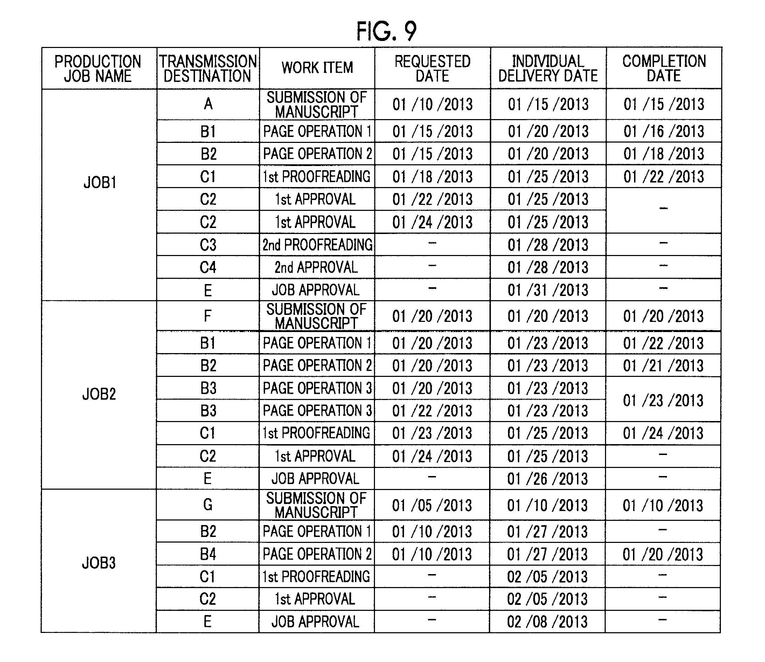

Fig. 9 is a schematic diagram illustrating the list of the history data 68 shown in Fig. 2. Here, two or more history information items are associated with each production job name (JOB1 to JOB3). In the example shown in Fig. 9, a transmission destination, a work item, a request date, an individual delivery date, and a completion date are given as examples of the history information. However, the invention is not limited thereto. Various kinds of information which can be specified from the content of notification data may be added.

In Step S7, the item extraction unit 80 analyzes the history data 68 acquired in Step S6 to extract a work item (hereinafter, referred to as an "execution target item") which corresponds to an execution phase at the present time for each production job. For example, the item extraction unit 80 may extract, as the execution target item, the work item which is disposed on the most downstream side in the defined execution order among the work items in which the notification data requested to be executed is present. Alternatively, when the history data 68 includes the information of the "completion date", the item extraction unit 80 can extract, as the execution target item, the work item which has not been completed and is disposed on the most upstream side.

In the example shown in Fig. 9, "1st approval" in the production job "JOB1", "1st approval" in the production job "JOB2", and "page operation 1" in the production job "JOB3" are extracted as the execution target items.

In Step S8, when the notification data related to each execution target item extracted in Step S7 has been transmitted, the re-notification determination unit 82 determines whether re-notification for urging execution is required. Specifically, the re-notification determination unit 82 may determine whether the re-notification is required, on the basis of the analysis result of the created history data 68, for example, information (hereinafter, referred to as individual information) about at least one of the delivery date, the degree of progress, the number of processes, and the number of re-notifications in each work item. In this case, it is determined that the necessity for re-notification increases as the delivery date becomes short, the degree of progress is reduced, the number of processes increases, or the number of re-notifications increases.

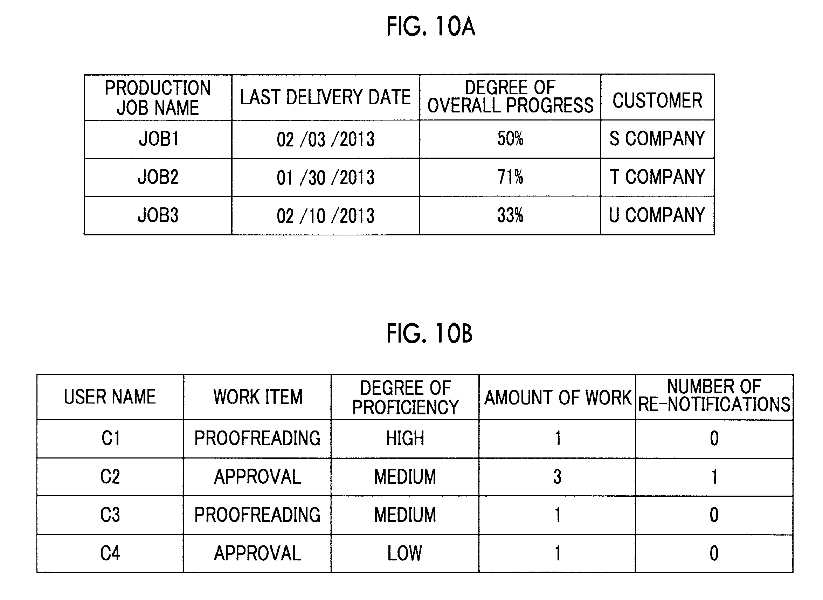

In addition, the re-notification determination unit 82 may determine whether the re-notification is required, on the basis of various other kinds of information, in addition to or separately from the individual information. Next, a detailed example will be described with reference to Figs. 10A and 10B.

Fig. 10A is a schematic diagram illustrating a list of all information. Here, the term "all information" means information about at least one of the last delivery date, the degree of overall progress, the number of all processes, and a customer for each production job. In the example shown in Fig. 10A, information about the last delivery date, the degree of overall progress, and the customer is given as an example of the "all information" for each production job name (JOB1 to JOB3). In this case, it is determined that the necessity for re-notification increases as the last delivery date becomes short, the degree of overall progress is reduced, or the degree of importance of the customer increases.

Fig. 10B is a schematic diagram illustrating a list of user information. Here, the term "user information" means information about at least one of the amount of work, the degree of proficiency, a business schedule, and the number of re-notifications for each user. In the example shown in Fig. 10B, information about a work item, the degree of proficiency, the amount of work, and the number of re-notifications is given as an example of the user information for each user name (here, C1 to C4). In this case, it is determined that the necessity for re-notification increases as the amount of work increases, the degree of proficiency is reduced, or the number of re-notifications increases.

It is assumed that the result of the determination process shows that "1st approval" in the production jobs "JOB1" and "JOB2" among the extracted execution target items needs to be re-notified.

In Step S9, the transmission processing unit 84 designates the user (hereinafter, referred to as a target user) who will be re-notified of information. Here, a user name "C2" which has a right to execute "1st approval" in the production jobs "JOB1" and "JOB2" is designated.

In Step S10, the transmission processing unit 84 determines the number of execution target items to be re-notified. When there is no execution target item (Step S10: nothing), Steps S11 to S13 are not performed and the process proceeds to Step S 14. In addition, when there is one execution target item (Step S10 one), the process proceeds to Step S11. When there are two or more execution target items (Step S10: two or more), the process proceeds to Step S12.

In Step S11, the transmission processing unit 84 creates notification data including the content of a notice related to one execution target item. In Step S12, the transmission processing unit 84 integrates the content of notices related to two or more execution target items to create notification data (hereinafter, referred to as integrated notification data 150).

When there are a plurality of execution target items, the transmission processing unit 84 may determine the degree of importance (for example, three levels, that is, high, medium, and low levels) of re-notification using at least one of the individual information, the all information, and the user information and set the degree of importance of re-notification. Here, it is assumed that the degree of importance of "JOB1" is set to the "medium" level and the degree of importance of "JOB2" is set to the "high" level, considering the remaining time from the present time to the last delivery date.

In Step S13, the transmission processing unit 84 transmits the notification data (including the integrated notification data 150) corresponding to one operation which is created in Step S12 to at least one terminal apparatus. The terminal apparatus, which is a transmission destination, can be specified on the basis of the content of registration in Step S3 (see Fig. 4). The remote server 44 transmits the notification data as mail to the operator terminal 24c in the printing company 16 through the router 42 and the LAN 40. Then, a target user "C2" checks the content of re-notification through the display unit 98 (Fig. 3) of the operator terminal 24c.

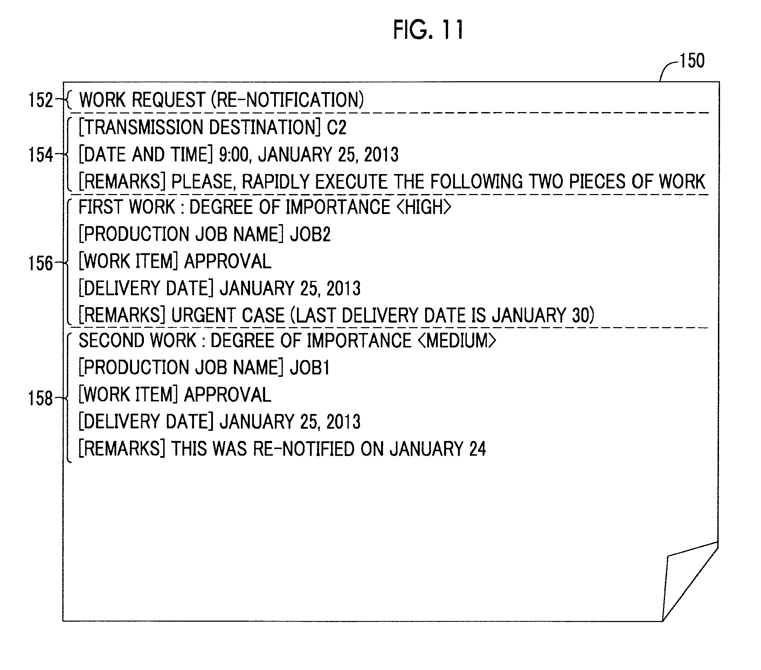

Fig. 11 is a first schematic diagram visibly showing the content of the integrated notification data 150. The integrated notification data 150 in a text format includes a title 152 indicating re-notification, transmission information 154 indicating a transmission destination and a transmission date and time, and two texts 156 and 158.

Each of the texts 156 and 158 includes the degree of importance, a production job name, a work item, a delivery date, and remarks. As can be seen from Fig. 11, the text 156 in "JOB2" which has a relatively high degree of importance is arranged before the text 158 in "JOB1" with a relatively low degree of importance. As such, since the re-notified contents are arranged from the top in the descending order of the degree of importance of the execution target item, they are likely to catch the user's eye, which improves user convenience.

In Step S14, the transmission processing unit 84 determines whether the designation of all target users has been completed. When it is determined that the designation has not been completed (Step S14: NO), the transmission processing unit 84 returns to Step S9 and repeatedly performs Steps S9 to S 13.

On the other hand, when it is determined that the designation has been completed (Step S14: YES), the transmission processing unit 84 returns to Step S1 in Fig. 4 and repeatedly performs Steps S1 to S14, similarly to the above. In this way, the product producing system 10 (particularly, the remote server 44) performs the re-notification process.

### <Another Example of Integrated Notification Data 150>

However, the integrated notification data 150 is not limited to the general text format shown in Fig. 11, but it may be described by a markup language including an extensible markup language (XML) and a hypertext markup language (HTML).

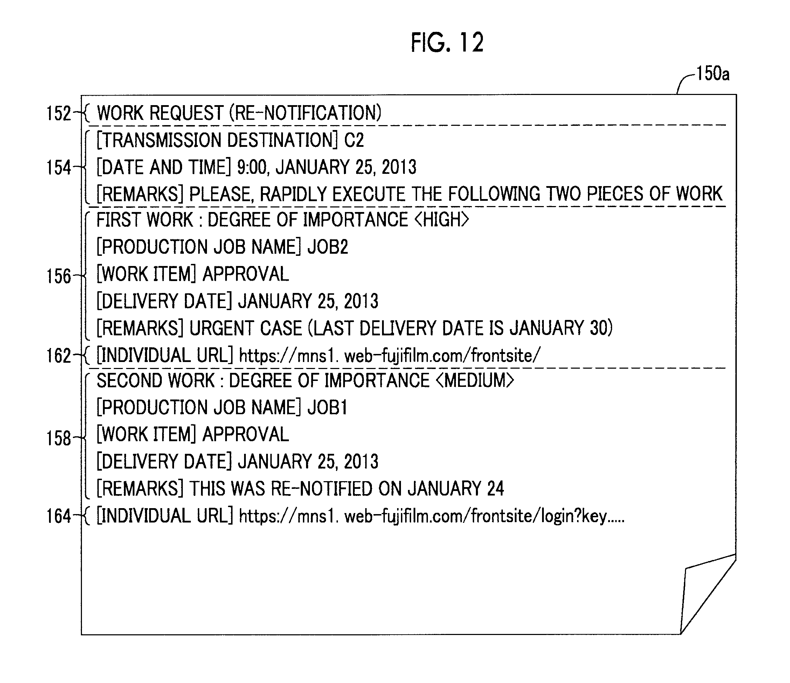

Fig. 12 is a second schematic diagram visibly showing the content of integrated notification data 150a. The integrated notification data 150a includes two location information items 162 and 164 in addition to the title 152, the transmission information 154, and the two texts 156 and 158. Each of the location information items 162 and 164 is electronic data related to the production job or a uniform resource locator (URL) indicating the location of a web page. Here, the location information items 162 and 164 correspond to a URL corresponding to one production job (hereinafter, referred to as an individual URL).

The location information 162 is, for example, a character string indicating a link destination to a log-in screen (not shown). The operator terminal 24c displays the log-in screen on the display unit 98 in response to an operation (specifically, a click operation) of designating the location information 162 which is being displayed. Then, a user "C2" having a log-in right can perform a log-in operation to access, for example, electronic data related to the production job "JOB2".

The location information 164 is, for example, a character string indicating a link destination to a web page related to the production job "JOB1". The operator terminal 24c displays the web page on the display unit 98 in response to an operation of designating the location information 164 which is being displayed. Then, the user "C2" can access, for example, electronic data related to "JOB1", without the log-in operation.

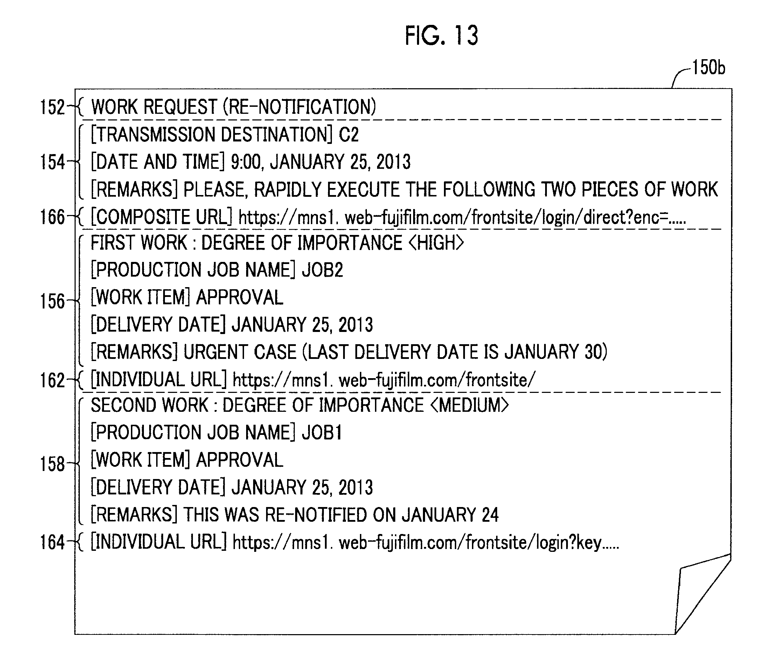

Fig. 13 is a third schematic diagram visibly showing the content of integrated notification data 150b. The integrated notification data 150b includes location information 166 in addition to the title 152, the transmission information 154, the two texts 156 and 158, and the two location information items 162 and 164. Here, the location information 166 corresponds to a URL associated with a plurality of production jobs (hereinafter, referred to as a composite URL).

The location information 166 is, for example, a character string indicating a link destination to a web page showing a production job list screen. The operator terminal 24c displays the list screen on the display unit 98 in response to an operation of designating the location information 166 which is being displayed. Then, the user "C2" can access, for example, electronic data related to "JOB1" and "JOB2" through the list screen. That is, particularly, this is convenient in that the user can directly access a plurality of re-notified production jobs, without checking the detailed content of the texts 156 and 158.

An encryption process is performed on a portion of the location information 166 by a known method. In this case, the operator terminal 24c acquires the true URL from the remote server 44 using an arbitrary cryptographic communication protocol. Therefore, the user "C2" can access the list screen whose browsing is restricted.

As such, the transmission processing unit 84 may transmit the integrated notification data 150a and/ or 150b including the electronic data related to the production job or the URL indicating the location of the web page. Therefore, it is very easy for the user to access necessary electronic data or web page through the URL.

For the description of the URL, the following can be arbitrarily combined: [1] whether the URL is an individual URL and/or a composite URL; [2] whether a log-in operation is needed; and [3] whether there is an encryption process. In addition, in the example shown in Figs. 12 and 13, the URL is included in the integrated notification data 150a or 150b related to re-notification. However, the URL may be included in notification data related to an execution request (that is, first notification).

### <Effect Obtained by Data Transmission Method>

The remote server 44 according to this embodiment can transmit notification data to at least one terminal apparatus (the operator terminal 24 and the administrator terminal 30) which participates in the production job for producing the printed matter PP.

The remote server 44 includes the job definition unit 76 which defines a series of work items forming the production job, a right to execute each work item, and the execution order of the work items, the item extraction unit 80 which extracts the work item corresponding to the execution phase as the execution target item for each production job, on the basis of the progress information of the work items which are sequentially executed, the re-notification determination unit 82 which, when notification data which requests the execution of each extracted execution target item has been transmitted, determines whether to re-transmit data for urging the execution, and the transmission processing unit 84 which integrates the content of the notices related to two or more execution target items, which are determined to be re-notified, for each user who has a right to execute a plurality of production jobs and transmits the integrated content as the integrated notification data 150 (150a and 150b) corresponding to one operation.

According to this structure, each user, who is a person in charge of the work item, can access, for example, the integrated notification data 150 using only one operation and collectively check the content of each execution target item. Therefore, when a plurality of production jobs having a complicated process are executed in parallel, it is possible to prevent each user from forgetting the content and existence of a notice.

### <Additional Notes>

The invention is not limited to the above-described embodiment, but various modifications and changes of the invention can be made without departing from the scope and spirit of the invention.

In this embodiment, the case in which the notification data indicates text information has been mainly described. However, the notification data is not limited thereto, but may be data which includes, for example, audio data and image data (a moving image or a still image) and can be notified through the five senses of humans.

In this embodiment, the process from the "submission of a manuscript" to the "final proof" in the production job of the printed matter PP has been mainly described. However, the work item is not limited thereto, but may include, for example, a plate making process, a printing process, and a post-press process (for example, cutting, paper folding, and binding).

In this embodiment, the case in which the printed matter PP is produced has been mainly described. However, the shape of the "product" is not limited thereto, but may be various types of products (for example, electronic data and a distribution service using streaming) which are provided to, for example, electronic commerce.

In this embodiment, the notification data is transmitted and received among a plurality of LANs 20, 32, and 40. However, the invention is not limited to this system structure. In other words, the invention can be applied to a system including a data communication apparatus and at least one terminal apparatus which can receive notification data transmitted from the data communication apparatus and participates in the production job.

## Claims

1. A data communication apparatus that can transmit notification data to at least one terminal apparatus which participates in a production job for producing a product, comprising:
a job definition unit that defines a series of work items forming the production job, a right to execute each of the work items, and an execution order of the work items;
an item extraction unit that extracts the work item corresponding to an execution phase as an execution target item for each production job, on the basis of progress information of each of the work items which are sequentially executed;
a re-notification determination unit that, when the notification data for requesting the execution of each execution target item extracted by the item extraction unit has been transmitted, determines whether the re-notification of data for urging the execution is required; and
a transmission processing unit that integrates the content of notices related to two or more execution target items which are determined to be required for the re-notification by the re-notification determination unit for each user who is given the execution right over a plurality of the production jobs defined by the job definition unit and transmits the integrated content as the notification data corresponding to one operation.

2. The data communication apparatus according to claim 1, further comprising:
a history data creation unit that accumulates at least a portion of the transmitted notification data to create history data,
wherein the re-notification determination unit determines whether the re-notification is required, on the basis of the analysis result of the history data created by the history data creation unit.

3. The data communication apparatus according to claim 1,
wherein the re-notification determination unit determines whether the re-notification is required, on the basis of individual information about at least one of a delivery date, a degree of progress, the number of processes, and the number of re-notifications for each work item.

4. The data communication apparatus according to claim 1,
wherein the re-notification determination unit determines whether the re-notification is required, on the basis of user information about at least one of an amount of work, a degree of proficiency, a business schedule, and the number of re-notifications for each user.

5. The data communication apparatus according to claim 1,
wherein the re-notification determination unit determines whether the re-notification is required, on the basis of all information about at least one of the latest delivery date, a degree of overall progress, the total number of processes, and a customer for each production job.

6. The data communication apparatus according to any one of claims 1 to 5,
wherein the transmission processing unit transmits the notification data including electronic data related to the production job or an URL indicating the location of a web page.

7. The data communication apparatus according to claim 6,
wherein the URL is an individual URL associated with one production job and/or a composite URL associated with a plurality of the production jobs.

8. A product producing system comprising:
the data communication apparatus according to any one of claims 1 to 7; and
at least one terminal apparatus that can receive the notification data transmitted from the data communication apparatus and participates in the production job.

9. A method using a data communication apparatus that can transmit notification data to at least one terminal apparatus which participates in a production job for producing a product, comprising:
a definition step of defining a series of work items forming the production job, a right to execute each of the work items, and an execution order of the work items;
an extraction step of extracting the work item corresponding to an execution phase as an execution target item for each production job, on the basis of progress information of each of the work items which are sequentially executed;
a determination step of, when the notification data for requesting the execution of each of the extracted execution target items has been transmitted, determining whether the re-notification of data for urging the execution is required; and
a transmission step of integrating the content of notices related to two or more execution target items which are determined to be required for the re-notification for each user who is given the execution right over a plurality of the production jobs and transmitting the integrated content as the notification data corresponding to one operation.
